(19) Europäisches Patentamt
European Patent Office
Office européen des brevets

(11) EP 0 971 542 A2

(12) EUROPEAN PATENT APPLICATION

(43) Date of publication:
12.01.2000 Bulletin 2000/02

(51) Int Cl.⁷: H04N 7/24

(21) Application number: 99305331.3

(22) Date of filing: 06.07.1999

(84) Designated Contracting States:
AT BE CH CY DE DK ES FI FR GB GR IE IT LI LU MC NL PT SE
Designated Extension States:
AL LT LV MK RO SI

(30) Priority: 10.07.1998 US 113669

(71) Applicant: TEKTRONIX, INC.
Wilsonville, Oregon 97070-1000 (US)

(72) Inventors:
• Stevens, Douglas C.
Portland, Oregon 97201 (US)
• van Dusen, Charles H.
Beaverton, Oregon 97075 (US)
• Penny, Bruce J.
Portland, Oregon 97231 (US)

(74) Representative: Molyneaux, Martyn William
Langner Parry
52-54 High Holborn
London WC1V 6RR (GB)

(54) **Readjustment of bit rates when switching between compressed video streams**

(57) A method and apparatus for the readjustment of bit rates when switching between compressed video streams, with or without video effects, uses bit rate adjustment to avoid overflow or underflow in buffer capacity at the splice point between the compressed video streams. A target bit rate for each compressed video stream is adjusted depending on the image complexity and buffer fullness near the splice point. The compressed video streams are decompressed and then requantized using a new quantization factor based upon the target bit rate to constrain the bit rates of the compressed video streams without a full decode and encode generation.

FIG.3

EP 0 971 542 A2

**Description**

**Background of the Invention**

The present invention relates in general to transmitting compressed video and in particular to the readjustment of bit rates when switching between compressed video streams while having access only to the compressed video streams.

In many systems used to transmit compressed video, one or more components in the system may have a fixed bitrate capacity, or a fixed capacity in a buffer used to buffer variable bitrate streams. In such systems in order to prevent overflow or underflow in the buffers at the inputs to these fixed bitrate components, the compressed video streams introduced into the system need to either have a fixed bit rate, or need to have their buffer occupancy readjusted by the system.

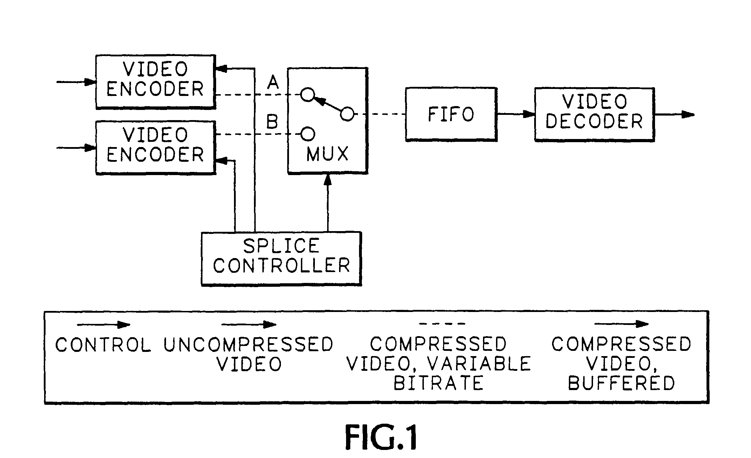

Fig. 1 shows a prior art system in which incoming uncompressed video is applied to video encoders, which generate compressed video streams **A** and **B**. A selector (MUX) selects one of these compressed video streams for transmission by various means to a First-In, First-Out buffer (FIFO) at the input of a video decoder. The FIFO buffers the compressed stream, and the decoder decodes the buffered compressed stream to produce uncompressed video. A splice controller provides feedback to the video encoders to control the bit rate of the streams delivered by the encoders, and coordinates the change-over between the streams at the selector.

Bitrate feedback to the encoders avoids causing overflow or underflow in the FIFO feeding the decoder during the switch from one encoded stream to another by the selector. Without this feedback control, the bit rate of the switched stream may be such that it exceeds the buffering capability of the FIFO for significant periods, and the FIFO may underflow or overflow.

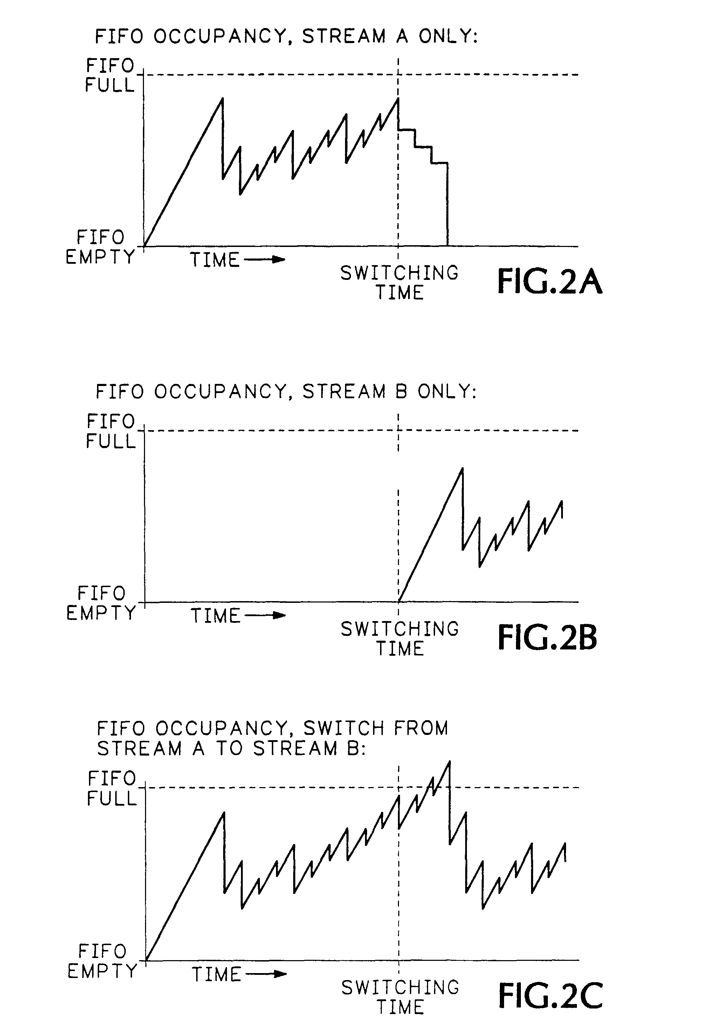

Fig. 2C is a graph showing a typical buffer overflow in a Moving Picture Expert Group (MPEG) system where the bit rate is uncontrolled. As shown in Figs. 2A and Fig. 2B, bits flowing into the FIFO increase the FIFO fullness (upward slope in the graph), and the decoding of each picture sharply decreases the FIFO fullness (downward vertical slope in the graph). Eventually, as shown in Fig. 2C, the incoming video has completely filled the FIFO and the compressed video which is transmitted in excess of the FIFO capacity is lost.

In this situation overflow may be avoided by providing feedback to the encoder generating compressed stream **A** of Fig. 2A to reduce the size of the last picture in stream **A**. The primary drawback to this scheme is that some systems have access only to the encoded stream, and not the encoders themselves, leaving the downstream components of the system without a way to adjust the bit rate. To address this difficulty, during encoding the encoder is directed to constrain the bit rate at predefined locations, leaving a splice point at which a switch between bit streams may later occur. There are several drawbacks to this scheme: all encoders contributing compressed video streams to such a system need to create these constrained bitrate intervals; the encoding process needs to know ahead of time where switching events will occur; and the switching between the compressed streams may only occur at times that have been designated by the encoder(s).

In addition to the basic requirement to switch between different compressed video streams, applications such as master control need to have a limited video effects capability. Although these effects may be performed by decompressing the entire compressed video streams, implementing the desired video effects in the baseband form, and then recompressing the resulting video streams, this is not a desirable approach due to both cost and image quality degradation. Especially where data rates commonly used for the distribution of compressed video to consumers in the home are low, multiple generations of compression/decompression are not supported.

What is desired is the readjustment of bit rates when switching between compressed video streams, with or without video effects, that avoids buffer underflow or overflow while having access only to the compressed video streams.

**Summary of the Invention**

Accordingly the present invention provides a method and apparatus for readjusting the bit rates when switching between compressed video streams at any point while having access only to the compressed video streams, and not the original encoder(s). Each compressed video stream is input to a bitrate adjuster. Each bitrate adjuster adjusts the bit rate of an input compressed video stream based upon a desired bit rate that is determined by a splice controller to avoid buffer underflow or overflow. The splice controller determines the desired bit rate according to buffer fullness and/or optional scene complexity. Each bitrate adjuster decodes the input compressed video stream and determines from the newly decompressed video stream and the desired bit rate a new quantization factor with which to re-quantize and encode the decompressed video stream. Effects may be added to the compressed video streams by optional effects decompressors, processors and compressor. The newly compressed video streams, with or without effects, are then input to a selector controlled by a source control signal that determines which compressed video stream to output.

The objects, advantages and other novel features of the present invention are apparent from the following detailed description when read in conjunction with the appended claims and attached drawing.

## Brief Description of the Drawing

Fig. 1 is a block diagram view of a prior art bitstream splicer for compressed video streams.

Figs. 2A, 2B, and 2C are graphical views showing how typical overflow of an MPEG system in which the bit rate is uncontrolled may occur.

Fig. 3 is a block diagram view of an apparatus for readjusting bit rates when switching between compressed video streams according to the present invention.

Fig. 4 is a block diagram view of a bitrate adjuster used in the apparatus of Fig. 3.

Fig. 5 is a graphical view showing the non-linear relationship between a quantization multiplier value and the number of octets a compressed Joint Photographic Expert Group (JPEG) picture occupies.

## Description of the Preferred Embodiment

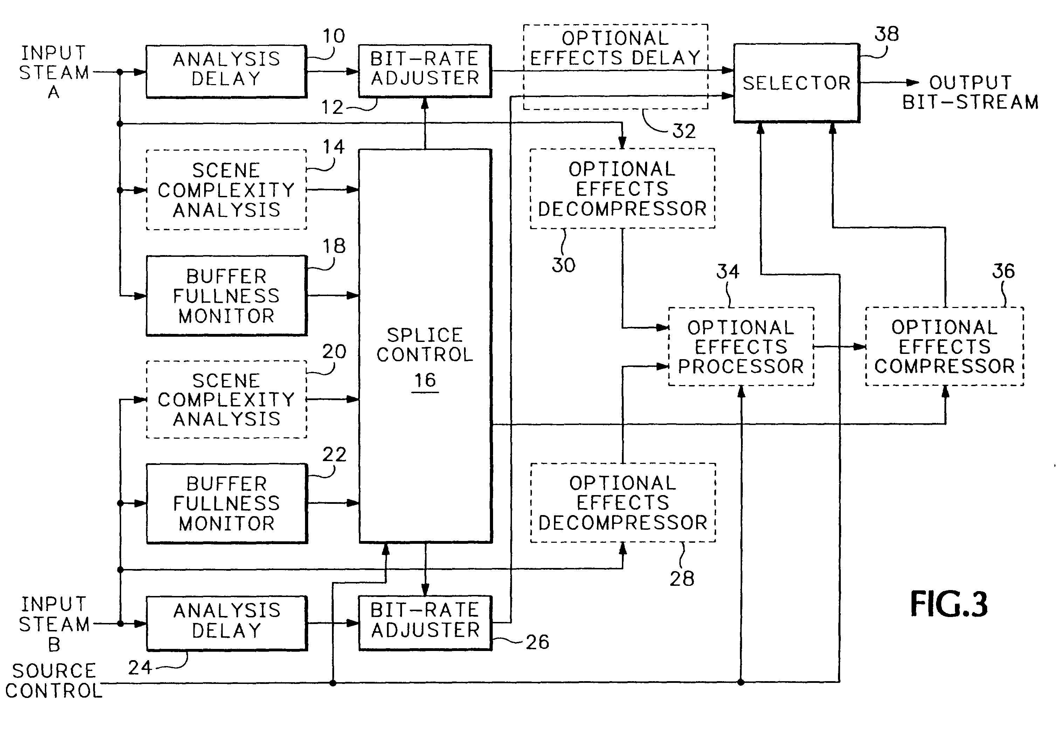

Referring to Fig. 3, compressed video input streams **A** and **B** are input to optional scene complexity analyzer **14, 20**, to buffer fullness monitors **18, 22**, and to analysis delay circuits **10, 24**, respectively. The optional scene complexity analyzers **14, 20** measure the difficulty of compressing a particular image. For example, the scene complexity measure may be a weighted sum of the high frequency coefficients from input discrete cosine transform (DCT) blocks.

The buffer fullness monitors **18, 22** measure the buffer occupancies of the input streams at their respective group of picture (GOP) boundaries in order to detect when overflow or underflow at a switch point may occur, i.e., where bitrate adjustment and requantization is required. The analysis delay circuits **10, 24** delay input of the compressed video input streams to bitrate adjusters **12, 24** to compensate for processing delays in generating a bitrate control signal from a splice controller **16**.

The splice controller **16** takes as inputs the buffer fullness and/or optional scene complexity of both the **A** and **B** compressed streams. A source control signal also is input to the splice controller and indicates at which point the switch should occur between compressed streams **A** and **B**. The splice controller 16 then modulates both the **A** stream and **B** stream bit rates through corresponding bitrate adjusters **12, 26**. A target bit rate in response to scene complexity and/or buffer fullness is determined through experimental results which are presented in a lookup table, whose inputs are all possible scene complexity values and/or all possible buffer fullness values, and whose output is the bit rate control signal for input to the corresponding bitrate adjuster **12, 26**. Further, the lookup table has separate sets of bitrate modulation values that are used before and after a full screen transition selected by the source control signal. The compressed image is more coarsely quantized immediately before a transition to lower the buffer content and more finely quantized after a transition. Also a lower target bit rate is determined for the first compressed video stream than for the second compressed video stream if an image in the first compressed video stream directly before a switch point between the first and second compressed video streams is less visually complex than an image in the second compressed video stream directly following the switch point. This reduces subjective image degradation. The quantization before and after a transition is controlled in a smooth manner, rather than just a step-function manner, by having separate lookup tables for each frame of video in the vicinity of the source transition.

The bitrate adjusters **12, 26** take advantage of the fact that compression has three phases -- transform, quantization and encoding, and that decoding has three inverse phases -- decoding, inverse quantization and inverse transform. The expensive component of both encoding and decoding is the transform phase, since most compression schemes rely on a transform from the spatial domain to the frequency domain and back again. Compression schemes that include motion prediction have an additional cost in the memory and processor power needed to implement the block-matching search used to generate the motion vectors. The bitrate adjusters **12, 26** eliminate the transform, inverse transform and motion vector calculations.

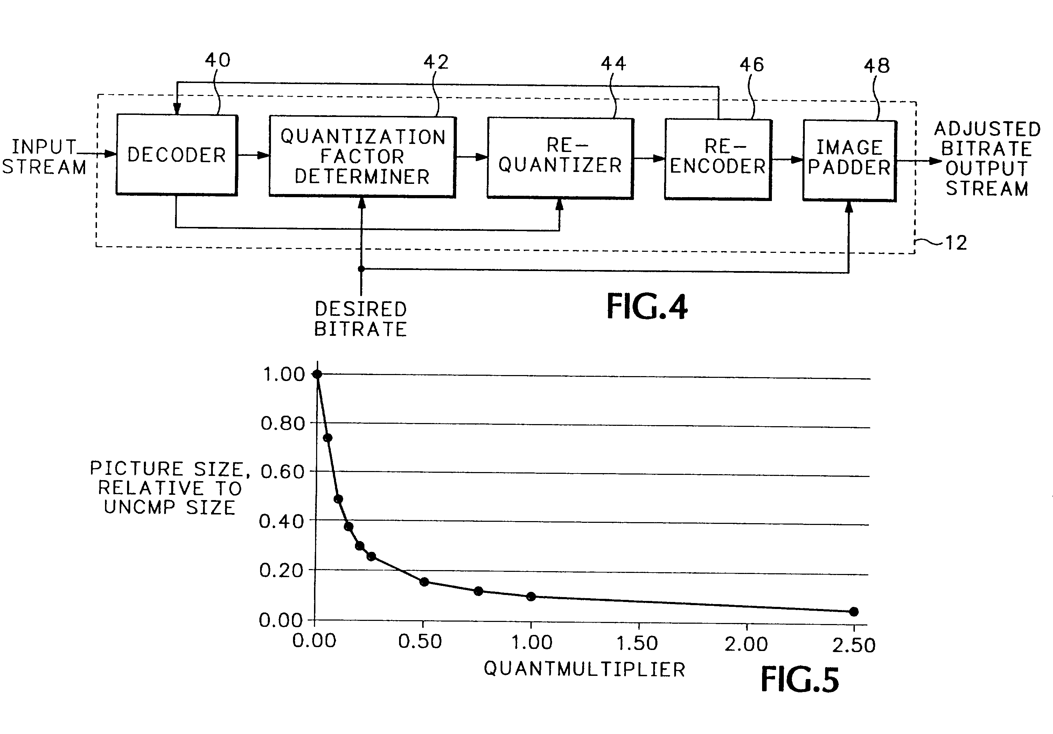

After the bit rate control signal from the splice controller **16** is applied to the bitrate adjusters **12, 26**, each bitrate adjuster performs the following steps. Referring to Fig. 4, the input compressed video stream is decoded and inverse quantized using a decoder **40**. "Decoded" used here is in the strict mathematical sense, and refers to conventional variable length decoding for both MPEG and JPEG compression. The image is inverse quantized using the quantization table included with the image. The decoded stream is then input to a quantization factor determiner **42**. The quantization factor determiner determines a new quantization factor needed to achieve the desired bit rate. If no quantization factor is found that reduces the bit rate to the desired level, the frequency coefficients are zeroed in the reverse of the scan order until a quantization factor is found that achieves the desired bit rate. This eliminates the contribution of the diagonal frequencies, beginning at the highest diagonal frequency first, then progressing to the high horizontal and vertical frequencies. The new quantization factor determined by the quantization factor determiner **42** and the decoded stream are then input to a requantizer **44**. The decoded stream is then quantized with the new quantization factor by the requantizer. The newly quantized stream is then input to a reencoder **46**, where the newly quantized stream is encoded. Algorithms for decoding and inverse-quantization are described in detail in the various compression standards. An image padder **48** adds zero-value bytes to the reencoded stream if necessary to achieve the target bit rate.

Although this process produces a number of picture artifacts, since the intent is to prepare the bitstreams for splicing and display at full frame rate, these artifacts are not very noticeable as the affected frames are visible for only a short time and the heaviest degradation occurs in the one or two frames before the splice point, affecting only a very few following frames.

The method used by the quantization factor determiner and requantizer depends on the compression method that is used to compress the encoded stream input to the bitrate adjusters **12, 26**. In JPEG compression each picture applies the same set of quantization tables to all blocks within the image. The JPEG standard describes a set of example quantization tables, referred to hereafter as the "standard quantization tables." Let *quantMultiplier* be a value that is used to multiply all entries in each of the standard quantization tables before these values are used to quantize during compression (a minimum value of 1.0 is used after the multiplication by *quantMultiplier).* There is a non-linear relationship between *quantMultiplier* and the number of octets (8-bit values, sometimes called "bytes") that the compressed picture occupies. Fig. 5 is a graph showing the relationship for a typical JPEG image. When *quantMultiplier* reaches 0, all quantization table entries are set to 1.0, and there is no compression loss.

One of a variety of algorithms that may be used by the quantization factor determiner **42** to determine the quantization factor for a JPEG input stream is as follows:

1) Determine the average quantization multiplier *oldQuantMultiplier* used to create the original picture, where the table *stdQuant* represents the standard quantization table given by the JPEG standard, and the table *pixQuant* represents the quantization table of the compressed image:

$$oldQuantMultiplier = \left( \sum_{row=0}^{7} \sum_{col=0}^{7} \frac{pixQuant[row][col]}{stdQuant[row][col]} \right) / 64$$

Note that the quantization table transmitted with the picture may not be derived from the standard quantization table, in which case *oldQuantMultiplier* is a cruder estimate than if the quantization table was derived from the standard quantization table.

2) Using the curve given in Fig. 5, and the values of the picture size, the desired new picture size from the desired bit rate input to the quantization factor determiner **42,** and *oldQuantMultiplier,* determine *newQuantMultiplier.* This is accomplished by calculation from a best-fit function for the curve shown in Fig. 5, but also may be calculated by a graphical method. A reasonable fit to the curve shown in Fig. 5 is:

$$relativePictureSize = \frac{1}{10*quantMultiplier+1}$$

Given that the original picture size (in octets) is $S_0$, that the desired new picture size from the desired bit rate input to the quantization factor determiner **42** is $S_1$, and the original quantization multiplier is $Q_0$, the new quantization factor $Q_1$ is:

$$Q_1 = \frac{\frac{S_0}{S_1}(10*Q_0+1)-1}{10}$$

3) Decode and dequantize the image using the quantization table included with the image, and requantize and reencode using the new quantization table.

A similar method is applicable with MPEG compression. In MPEG compressed bitstreams, each macroblock may use an independent quantization table multiplier, which effectively creates a quantization table for that macroblock by multiplying the standard quantization table by this multiplier.

One of a variety of algorithms that may be used by the quantization factor determiner **42** and the requantizer **44** to determine the quantization factor for and requantize an MPEG input stream is:

1) Calculate the average quantization multiplier *oldQuantMultiplier* used to create the original picture. Let the quantization multiplier for a macroblock be *quantMultiplier*[*block*], where *block* is the block number and *NB* is the number of macroblocks, then

$$oldQuantMultiplier = \left( \sum_{block=0}^{NB} quantMultiplier[block] \right) \ / \ NB$$

2) Using the curve shown in Fig. 5, the values of the picture size, the desired new picture size from the desired bit rate input to the quantization factor determiner **42** and *oldQuantMultiplier,* determine *newQuantMultiplier.* 3) Determine the quantization factor by multiplying the standard quantization table by *newQuantMultiplier.*
4) For each macroblock, the decoder **40** decodes and inverse quantizes the macroblock using the quantization table multiplied by *quantMultiplier* for that macroblock. If *quantMultiplier* is less than or equal to *newQuantMultiplier*, the quantization factor determiner **42** does not modify the macroblock or its quantization multiplier. If *quantMultiplier* is greater than *newQuantMultiplier,* the requantizer **44** requantizes the input stream using the new quantization factor, which is the quantization table multiplied by *newQuantMultiplier,* and reencodes.

Since the requantization step introduces some image quality degradation, although not nearly as much degradation as fully decoding and recoding the images, the scene complexity analyzers **14, 20** may be used to assist in allocating the requantization to minimize subjective image degradation by weighting the bitrate reduction of the two images according to the visual complexity, i.e., coding difficulty, of the images. If the image before the switch point is easier to code than the image after the switch point, more data is removed from the first bitstream than from the second bitstream. Conversely if the image before the switch point is more difficult to code than the image after the switch point, more data is removed from the second bitstream than from the first bitstream. In general more data is removed prior to and near the switch point than far after the switch point if the switch is between sufficiently different images so as to provide visual masking near the switch point. The number of images to be requantized may be larger when more total data needs to be removed.

When using the above-described methods, the first estimate of the new quantization multiplier may produce a bit rate that is either too low or too high. If the result is below the target bit rate, the image output from the reencoder **46** may be padded by the image padder circuit **48** which adds zero-value bytes to the image up to the full image size desired. Since the start code for an image is "001" bytes, any number of zero-value bytes, or padding, may preface the start code. If the result is above the target bit rate, or the amount of padding required is excessive, the new quantization multiplier may be adjusted and the algorithms described above may be applied again.

Referring again to Fig. 3, each compressed video stream **A** and **B** is processed though the bitrate adjusters **12, 26**, as described above. These compressed video signal paths though the bitrate adjusters **12, 26** are the primary signal paths. During normal operation in which no video effects are being used, the **A** or **B** compressed video signal paths alone are used. For optional operations, such as keying, wipes, or other effects, another signal path in addition to the **A** and **B** compressed video signal paths is used. In this case the **A** and **B** compressed video streams are both fed to conventional decoders **28, 30** which decompress the **A** and **B** compressed video streams in the region where the video effect is desired. The decompressed video streams are then input to and manipulated in a standard baseband video effects processor **34**. This manipulation occurs according to the source control signal to the optional effects processor **34** which indicates at which point the switch occurs between compressed streams **A** and **B**. After application of the desired effects the decompressed video stream signal is recompressed in an optional effects compressor **36**.

One example of adding video effects is the requirement to key a station logo over a precompressed network High Definition TeleVision (HDTV) video feed prior to transmission. The station logo typically occupies a small portion of the total video image. Since the network feed may be compressed to such a low bit rate, typically 19 Mbits/s including video, audio and data, multiple generation quality is not acceptable. In this case a master control switch provides the source control signal so only those blocks that need new video inserted are decoded. These blocks then have the desired effects added and are recompressed. However the new blocks may cause the resulting combined compressed bitstream to exceed the target bitrate specification, particularly if the new blocks are visually more complex than the original blocks were. In this case more bits may be needed to be allocated to the new blocks than were allocated to the blocks which they replace. To have the necessary available space, the other portions of the image are more coarsely quantized.

This compressed video stream, together with the bitrate adjusted **A** and **B** compressed video streams, are input to a selector **38**, which outputs one of the three compressed video streams. The **A** and **B** compressed video streams are delayed by an optional effects delay circuit **32** to compensate for the optional effects manipulations. The operation of the selector is controlled by both the source control signal and the motion vectors of the compressed video streams. If in a particular region of the desired output picture, determined by the source control signal to the selector **38**, the output compressed video stream is to be either the **A** or **B** compressed video stream alone, and if that output region does not use any motion vectors which point from a different input signal region, then the output for that region of the picture is simply the **A** or **B** compressed video stream to the selector **38** alone. If in a particular region of the desired output picture, determined by the source control input to the selector **38,** the video is a combination of video sources (keyed, wiped dissolved, etc.) or has motion vectors which point from a different video source, then the output compressed video stream from the selector is the reprocessed video stream from the optional effects compressor **36**.

Thus the present invention provides a method and apparatus for readjustment of bit rates when switching between compressed video streams, with or without video effects, while accessing solely the compressed video streams by providing a target bit rate for each compressed stream based upon buffer fullness measures and/or scene complexity measures, decoding in a mathematical sense (without transformations) the bitstreams, inverse quantizing the decoded bitstreams, determining a new quantization value from the target bit rates for each bitstream, and requantizing and recoding the bitstreams using the new quantization values.

**Claims**

1. A method for readjusting bit rates when switching between compressed video streams comprising the steps of:

   determining a target bit rate for each of the compressed video streams based upon a splice point between the compressed video streams indicated by a source control signal;
   adjusting the bit rates of the compressed video streams according to the respective target bit rates to provide adjusted bitrate compressed video streams; and
   selecting one of the adjusted bitrate compressed video streams according to the source control signal.

2. The method according to claim 1 wherein the adjusting step comprises the steps of:

   decoding and inverse quantizing the compressed video streams to produce decoded video streams;
   determining a new quantization factor needed to achieve the target bit rate for each of the decoded video streams;
   requantizing the decoded video streams with the new quantization factors to produce requantized video streams; and
   encoding the requantized video streams to produce the adjusted bitrate compressed video streams.

3. The method according to claim 2 wherein the new quantization factor determining step comprises the steps of:

   calculating for each compressed video stream an average quantization multiplier used to create an image in the compressed video stream;
   forming a best-fit function for each compressed video stream describing a relationship between the average quantization multiplier and an image size; and
   determining the new quantization factor for each compressed video stream based upon the target bit rate and its relationship to the corresponding average quantization multiplier on the best-fit function.

4. The method according to claim 2 wherein the adjusting step further comprises the step of padding each adjusted bitrate video stream when the bit rate from the encoding step is less than the target bit rate to produce the adjusted bitrate video stream at the target bit rate.

5. The method according to claim 1 wherein the determining step comprises the step of determining the target bit rate as a function of buffer fullness near the splice point.

**6.** The method according to claim 1 wherein the determining step comprises the step of determining the target bit rate as a function of scene complexity near the splice point.

**7.** The method according to claim 6 wherein the determining step further comprises the step of determining the target bit rate as a function of buffer fullness together with the scene complexity.

**8.** The method according to claims 6 or 7 further comprising the step of determining a lower target bit rate for a first one of the compressed video streams than for a second one of the compressed video streams if an image in the first compressed video stream directly before the splice point has a lower scene complexity than an image in the second compressed video stream directly after the splice point.

**9.** The method according to claim 1 further comprising the steps of:

decompressing the compressed video streams where a video effect is desired to produce baseband video streams;
processing the baseband video streams to produce an effects video stream;
compressing the effects video stream to produce a compressed effects video stream; and
inputting the compressed effects video stream to the selecting step so that one of the adjusted bitrate compressed video streams or the compressed effects video stream is selected according to the source control signal.

**10.** An apparatus for the readjustment of bit rates when switching between compressed video streams comprising:

means for determining a target bit rate for each of the compressed video streams based upon a splice pointl between the compressed video streams indicated by a source control signa;
means for adjusting the bit rates of the compressed video streams according to the target bit rates to produce adjusted compressed video streams; and
means for selecting one of the adjusted compressed video streams according to the source control signal.

**11.** The apparatus according to claim 10 wherein the adjusting means comprises:

means for decoding and inverse quantizing the compressed video streams to produce decoded video streams;
means for determining a new quantization factor for each of the decoded video streams in order to achieve the target bit rates;
means for requantizing the decoded video streams using the new quantization factors to produce requantized video streams; and
means for encoding the requantized video streams to produce the adjusted compressed video streams.

**12.** The apparatus according to claim 11 wherein the new quantization factor determining means comprises:

means for calculating for each compressed video stream an average quantizer multiplier used to create an image in the compressed video stream;
means for forming a best-fit function for each compressed video stream describing a relationship between the average quantization multiplier and an image size; and
means for determining the new quantization factor for each of the compressed video streams based upon the target bit rate and its relationship to the corresponding average quantization multiplier on the best-fit function.

**13.** The apparatus according to claim 10 wherein the determining means comprises means for determining the target bit rates as a function of buffer fullness near the splice point.

**14.** The apparatus according to claim 10 wherein the determining means comprises means for determining the target bit rates as a function of scene complexity near the splice point.

**15.** The apparatus according to claim 14 wherein the determining means further comprises means for determining the target bit rates as a function of buffer fullness near the splice point as well as the scene complexity.

**16.** The apparatus according to claims 14 or 15 further comprising means for determining a lower target bit rate for a first one of the compressed video streams than for a second one of the compressed video streams if an image in the first compressed video stream directly before the splice point has a lower visual complexity than an image in the second compressed video stream directly after the splice point.

17. The apparatus according to claim 11 wherein the adjusting means further comprises means for padding each adjusted bitrate video stream when the bitrate from the encoding means is less than the target bit rate to produce the adjusted bitrate video stream at the target bit rate.

18. The apparatus according to claim 10 further comprising:

    means for decompressing the compressed video streams where video effects are desired to produce baseband video streams;
    means for processing the baseband video streams according to the desired video effects to produce an effects video stream; and
    means for compressing the effects video stream to produce an effects compressed video stream, the effects compressed video stream being input to the selecting means together with the adjusted bitrate compressed video streams so that in response to the source control signal one of the adjusted bitrate compressed video streams or the effects compressed video stream is output.

19. An apparatus for the readjustment of bit rates when switching between compressed video streams comprising:

    a splice controller having as inputs parameters derived from the compressed video streams and having as outputs target bit rates for the compressed video streams based upon a splice point indicated by a source control signal;
    a plurality of bitrate adjusters, one for each of the compressed video streams, each having as an input one of the compressed video streams and producing as an output an adjusted bitrate compressed video stream as a function of the target bit rate from the splice controller; and
    a selector having as inputs the adjusted bitrate compressed video streams from the bitrate adjusters and having as an output one of the adjusted bitrate compressed video streams determined by the source control signal.

20. The apparatus of claim 19 wherein each bitrate adjuster comprises:

    a decoder having as an input the compressed video stream and producing as an output a decoded and unquantized video stream;
    a quantizer factor determiner having as inputs the decoded and unquantized video stream and the target bit rate and having as an output a new quantization factor needed to achieve the desired bit rate;
    a requantizer having as inputs the decoded and unquantized video stream and the new quantization factor and having as an output a requantized video stream; and
    a reencoder having as an input the requantized video stream and having as an output the adjusted bitrate compressed video stream.

21. The apparatus as recited in claim 19 wherein the splice controller comprises a lookup table having as inputs a buffer fullness near the splice point for each compressed video stream and producing as outputs the target bit rates.

22. The apparatus as recited in claim 19 wherein the splice controller comprises a lookup table having as inputs a scene complexity near the splice point for each compressed video stream and producing as outputs the target bit rates.

23. The apparatus as recited in claim 22 wherein the lookup table also has as inputs a buffer fullness near the splice point for each compressed video stream and produces as outputs the target bit rates.

24. The apparatus as recited in claims 22 or 23 wherein the lookup table provides as outputs the target bit rates where the target bit rate for a first one of the compressed video streams before the splice point is lower than the target bit rate for a second one of the compressed video streams after the splice point if an image in the first compressed video stream directly before the splice point has a lower visual complexity than an image in the second compressed video stream directly after the splice point.

25. The apparatus according to claim 20 wherein the bitrate adjuster further comprises an image padder for each of the adjusted bitrate compressed video streams having as inputs the adjusted bitrate video stream and the target bit rate and having as an output the adjusted bitrate video stream at the target bit rate with padded bytes added when the bit rate from the reencoder is less than the target bit rate.

**26.** The apparatus according to claim 19 further comprising:

a plurality of decompressors, one for each of the compressed video streams, each having as an input one of the compressed video streams and providing as an output a baseband video stream where a video effect is desired;

an effects processor having as inputs the baseband video streams from the decompressors and having as an output an effects video stream; and

a compressor having as an input the effects video stream and providing as an output an effects compressed video stream, the effects compressed video stream being input to the selector so that in response to the source select signal either one of the adjusted bitrate compressed video streams or the effects compress video stream is provide as the output.

FIG.1

FIFO OCCUPANCY, STREAM A ONLY:

**FIG.2A**

FIFO OCCUPANCY, STREAM B ONLY:

**FIG.2B**

FIFO OCCUPANCY, SWITCH FROM
STREAM A TO STREAM B:

**FIG.2C**

FIG.3

EP 0 971 542 A2

EP 0 971 542 A2

FIG.4

FIG.5